Europäisches Patentamt

**European Patent Office**

**Office européen des brevets**

(19)

(11) Publication number: **0 067 506**

**A1**

(12) # EUROPEAN PATENT APPLICATION

(21) Application number: **82301748.8**

(22) Date of filing: **02.04.82**

(51) Int. Cl.³: **B 64 D 15/16**

(30) Priority: **04.06.81 GB 8117135**

(43) Date of publication of application:
**22.12.82 Bulletin 82/51**

(84) Designated Contracting States:
**DE FR GB IT**

(71) Applicant: **ROLLS-ROYCE LIMITED**
**65 Buckingham Gate**
**London, SW1E 6AT(GB)**

(72) Inventor: **Shellard, Ian John**
**8 Lonsdale Road**
**Radford Nottingham(GB)**

(72) Inventor: **Millington, Nevil**
**21 Drury Avenue**
**Spondon Derby(GB)**

(74) Representative: **Kelvie, George Thomas**
**Patent Departement Rolls-Royce Limited P.O. Box 31**
**Moor Lane**
**Derby DE2 8BJ(GB)**

(54) Aircraft de-icer.

(57) An electrical de-icing device for use on a gas turbine engine consists of an electrical coil 25 adopted to induce electro-magnetic impulses within a metal plate 22 secured by resilient means 23 to the engine portion to be de-iced. Energisation of the coil results in displacement of the metal plate which transmits mechanical impulses into the part 20a to be de-iced such that the ice is removed therefrom.

Fig. 2.

EP 0 067 506 A1

Croydon Printing Company Ltd.

This invention relates to aircraft de-icers and more particularly to electrical impulse de-icers suitable for de-icing thin walled aircraft structures and gas turbine engine parts.

One known form of device for de-icing surfaces of aircraft comprises rubber de-icer boots the de-icer boots communicating with a source of compressed air. When a layer of ice has formed upon the surface of the aircraft compressed air is supplied to the de-icer boots which expand thus breaking up the ice which is subsequently torn off by the airstream.

However such a de-icer suffers disadvantages in that the material from which the boot is manufactured suffers rapid deterioration and furthermore it is extremely difficult to remove condensation from the system which also leads to early boot failure.

Most high speed aircraft and aero-engines are equiped with de-icing equipment which consist of electrical heating elements or devices which require a supply of heated air. However such devices use a great deal of power and therefore tend to reduce the overall efficiency and performance of the aircraft.

Since the heating devices do not cover the entire surface of the aircraft the ice is melted and blown from the heated zones but then tends to freeze again on other unheated portions of the aircraft.

A further known de-icing device is known as an electrical impulse de-icer. Such devices remove ice by means of transforming electric current pulses into mechanical impulses. Such devices usually consist of coils connected to a pulsed electrical current source the coils located in close proximity to the wall to be de-iced so as to cause currents induced by the coils to flow through the portion to be de-iced. Mechanical impulses resulting from the interaction between the primary currents in the coils and the current induced in the part to be de-iced causes elastic deformation of the surface being de-iced whereby ice is removed from the surface.

This type of system however suffers two major disadvantages firstly the elastic deformation is induced within the portion to be de-iced over a relatively small area and may therefore result in premature fatiguing of that portion. Furthermore such a system only works well on an electrically conducting metal part and is therefore

- 2 -

unsuitable for use on most fibre reinforced composite structures.

An object of the present invention is to provide an electrical impulse de-icing device which substantially overcomes the aforementioned disadvantages.

According to the present invention a device for de-icing a thin walled structure comprises at least one electro-mechanical converter, the at least one electro-mechanical converter consisting of at least one coil and at least one metal plate spaced therefrom and means for generating electrical impulses, the at least one metal plate being disposed between compliant layers of material, one said layer of material being located adjacent to the thin walled structure to be de-iced such that upon energisation of the at least one coil the at least one metal plate is displaced within its respective compliant layers and thus applies a mechanical impulse to the wall to be de-iced. Preferably the one said layer of material located Preferably the one said layer of material located adjacent to the thin wall structure is secured thereto.

Preferably the means for generating electrical impulses is arranged to ensure a pulse duration of not more than 0.1 seconds and intervals between the pulses exceeding the duration of each pulse by a factor of at least ten.

Furthermore the means for generating electrical impulses is in turn connected to electrical storage means.

Preferably the device includes a plurality of coils and metal plates which are connected to a common means for generating electrical impulses the plurality of coils being arranged to be operated successively.

Furthermore the de-icing device is particularly suitable for removing ice from a thin wall composite structure forming a part of the inlet portion of a gas turbine engine fan duct.

For better understanding thereof an embodiment of the invention will be more particularly described by way of example only and with reference to the accompanying drawings in which:-

Figure 1 shows a diagramatic side view of a ducted fan gas turbine engine including an embodiment of the present invention.

Figure 2 shows an enlarged cross-sectional view of the embodiment shown diagramatically at Figure 1.

- 3 -

Referring to the drawings a gas turbine engine shown generally at 10 includes in flow series a fan 12, an intermediate pressure compressor 13, a high pressure compressor 14, combustion equipment 15, a high pressure turbine 16, an intermediate pressure turbine 17, a low pressure turbine 18, the engine terminating in an exhaust nozzle 19. Located radially outwardly of the fan 12 is provided a fan duct 20 within the forward facing inlet portion of which is located at least one de-icing device 21 made in accordance with the present invention.

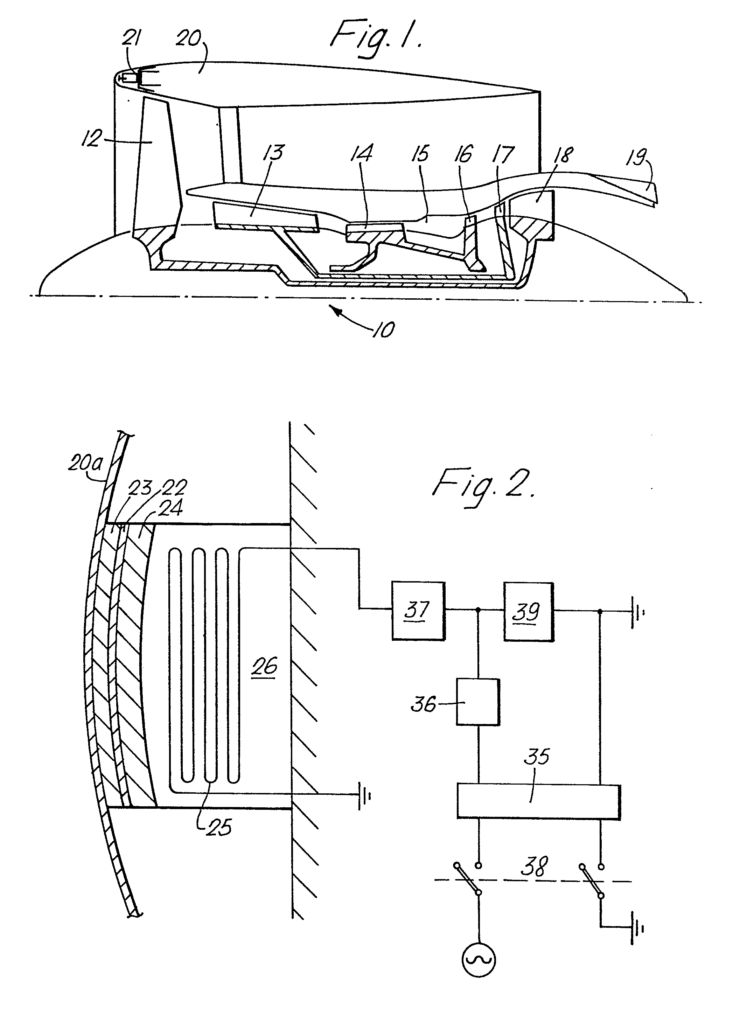

Figure 2 of the drawings shows a cross-sectional view of the de-icing device shown diagramatically at Figure 1 in greater detail and consists of a portion of the fan duct inlet skin 20a to which is attached an assembly including a metallic plate 22 sandwiched between two compliant layers 23 and 24. The compliant layers 23 and 24 may consist of natural rubber or silicon rubber or any suitable material which remains resilient at the low temperatures encountered in aircraft operating environments. The compliant layers 23 and 24 may be bonded to the metallic plate 22 or alternatively the metallic plate 22 may be encapsulated within a mass of compliant material, the assembly including the plate 22 and the layers 23 and 24 are bonded to the thin walled skin 20a using a suitable adhesive.

Located adjacent the compliant layer 24 is a coil 25 encapsulated or situated within a non-conducting case 26 the casing being rigidly secured to fixed structure 27 by means not shown. The coil 25 forms a portion of a simple electrical circuit consisting of a source of electrical impulses connected to a power supply. The source of electrical impulses consisting of a transformer 35 connected to a rectifier 36 to discharge devices 37 for producing electrical pulses and a switch 38. Across the rectifier 36 and the transformer 35 there is connected a power storage means 39 for example a capacitor so as to reduce power consumption from the electrical circuit. The discharge device 27 is connected to the means 2 which generate electromagnetic field pulses.

The abovementioned circuit when in operation produces electromagnetic field pulses which interact with the metal plate 22 to produce mechanical impulses upon the plate 22 which impulses react through the

- 4 -

compliant layer 23 upon the relatively thin walled fan duct inlet portion 20a. The mechanical impulses acting upon the portion 20a cause elastic deformation of the portion 20a in the zone to be de-iced, therefore shaking or knocking the ice from the surface.

It will be appreciated if the relatively thin walled inlet portion 20a is manufactured from a fibre reinforced resin material or alternatively from a metal having a low conductivity these problems do not prevent use of a de-icing system making use of the electro-magnetic effect because of the provision of the metallic plates 22. Furthermore the compliant layer 23 ensures that the effect of the mechanical displacement of the plate 22 is spread over a relatively large area of the inlet wall 20a thus reducing the fatigue problems to a minimum.

Although the invention has been particularly described for convenience showing only one de-icing device it will be readily understood by those skilled in the art that a gas turbine engine may include many such devices to ensure satisfactory anti-icing. Furthermore all such devices may be controlled by one electrical circuit by connecting a plurality of coils 25 to the electrical circuit such that they operate successively.

It is believed that for efficient operation of a de-icing device made in accordance with the present invention the means for generating impulses is preferably arranged to ensure that a pulse duration to each coil of not more than 0.1 seconds and the interval between pulses exceeds the duration of each pulse by a factor of at least ten to each coil.

It will be appreciated that although the described embodiment of this invention is directed to a de-icing device suitable for use on a gas turbine engine fan duct, the device could well be used on other parts of such engines or on different types of engines where ice build up occurs. Furthermore the device could be used on aircraft structures and helicopters or ships etc. where ice build-up causes problems.

- 5 -

What We Claim Is:-

1. A device for de-icing a thin walled structure including at least one electro-mechanical converter consisting of at least one coil and at least one metal plate spaced therefrom and means for generating electrical impulses characterised in that the at least one metal plate (22) is disposed between complient layers of material (23-24) one said layer of material (23) being located adjacent the thin walled structure (20a) to be de-iced, such that upon energisation of the at least one coil (26) the at least one metal plate (22) is displaced within its respective compliant layers (22 and 24) and thus applies a mechanical impulse to the wall (20a) to be de-iced.

2. A device as claimed in claim 1 characterised in that one layer of complient material (23) located adjacent to the thin walled structure (20a) is secured thereto.

3. A device as claimed in claim 1 characterised in that the means for generating electrical impulses is arranged to ensure a pulse duration of not more than 0.1 seconds and intervals between the pulses exceeding the pulses by a factor of at least ten.

4. A device as claimed in claim 1 characterised in that the means for generating electrical impulses is connected to electrical storage means.

5. A device as claimed in claim 1 characterised in that a plurality of coils 26 and metal plates 22 are connected to a common means for generating electrical impulses.

6. A device as claimed in claim 5 characterised in that the plurality of coils (26) are adapted to operate successively.

7. A device as claimed in any preceding claim characterised in that it is particularly suitable for removing ice from thin walled composite structure forming a part of the inlet portion of a gas turbine engine fan duct.

Fig. 1.

Fig. 2.

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A-1 222 151 (LEVIN) *Page 1, line 93 to page 2, line 7; page 2, lines 33 to 39 and 51 to 64 and 82 to 86 and 93 to 107; figures 1,2* | 1,3-6 | B 64 D 15/16 |
| Y | GB-A-1 369 350 (LEVIN) *Page 2, lines 96 to 128; page 3, lines 52 to 71; figures 1-3* | 1-3 | |
| A | AIRCRAFT ENGINEERING, vol. 44, no. 7, July 1972, pages 7-10, London (GB); I.A.LEVIN: "USSR electric impulse de-icing system design". *Page 7, left-hand column, line 23 to right-hand column, line 2; page 7, right-hand column, lines 44 to 53; page 10, left-hand column, lines 7 to 15; figure 6* | 1,4,5, 7 | |

TECHNICAL FIELDS SEARCHED (Int. Cl. ³)

B 64 D

The present search report has been drawn up for all claims

| Place of search THE HAGUE | Date of completion of the search 10-08-1982 | Examiner ZERI A. |
|---|---|---|